# EUROPEAN PATENT SPECIFICATION

(11) **EP 3 189 285 B1**
(45) Date of publication and mention of the grant of the patent: **27.02.2019**
(21) Application number: 15805380.1
(22) Date of filing: 01.09.2015
(51) Int. Cl.: F24S 23/30, F24S 30/40

(54) **DEVICE FOR THE UTILIZATION OF SOLAR ENERGY**
VORRICHTUNG ZUR NUTZUNG VON SONNENENERGIE
DISPOSITIF POUR L'UTILISATION DE L'ÉNERGIE SOLAIRE

(30) Priority: 03.09.2014 CZ 201400603 U
(43) Date of publication of application: 12.07.2017
(73) Proprietor: Sehnoutek, Jan, 11000 Praha 1 (CZ)
(72) Inventor: Sehnoutek, Jan, 11000 Praha 1 (CZ)
(74) Representative: Musil, Dobroslav
(86) International application number: PCT/CZ2015/000101
(87) International publication number: WO 2016/034156

(56) References cited:
- EP-A1- 2 752 892
- WO-A1-2009/002168
- WO-A1-2009/115940
- GB-A- 1 590 841
- GB-A- 2 431 513
- US-A- 4 284 839

## Description

### Technical field

A device for the utilization of solar energy, which contains a row of absorbing members arranged in a rigid lamella, each of the absorbing members containing an optical lens and an absorbing means coupled to it in an optical axis.

### Background art

Recently in the field of the utilization of solar energy the focus of investors' interest has been moving from large-scale high performance ground-mounted photovoltaic plants to smaller units suitable to be used as a source of electrical energy or a heat source for heating and providing domestic hot water for houses, guest houses, swimming pools and the like.

Common for such uses are devices illuminated by the sun, whose rays hit directly the surface of the absorbers - that is photovoltaic panels or heat exchangers to heat water. The performance of such a device is determined by the angle of incidence of rays on the surface of the solar panel. If the sun rays fall perpendicularly on the irradiated surface, the reflection of the rays is minimum. With regard to the changing position of the sun in the sky, absorbers are adjustable in relation to the solid ground so that, if possible, the required angle of incidence of the rays will be maintained. In most cases, adjustment of absorbers takes place automatically depending on the position of the sun.

This fundamental technical task, which is essential for the utilization of solar energy, - adjustment of absorbers - is solved, for example, by document CZ 297801 B6 or EP2752892A1, which describes a photovoltaic module comprising optical receivers, each of which includes an optical lens and a photovoltaic cell associated with it. The optical receivers are mounted rotatably in the module and at the bottom are coupled by a coupling member. One of the optical receivers is connected to a motor, which rotates it in the required direction so that the optical receivers can be turned towards the sun, whereby this movement is transmitted to the other optical receivers via the coupling member. The disadvantage is the position of the motor next to the row of optical receivers, which makes it impossible to add another row of optical receivers, and especially the fact that the motor location on a large arm from the point of torque transmission to the other optical receiver increases the demands on the motor performance. This device cannot be used for turning a plurality of optical receivers by one motor, which increases the cost of the device.

The aim of the solution according to document CZ 284185 B6 is to increase the efficiency of the utilization of solar energy by concentrating rays on the surface or surfaces of a "solar window", in whose frame is mounted an absorber tube, whereby between the sun and the frame is arranged a raster planar system of optical converging lenses. Their focal length determines the distance of the system of lenses from the surface of the absorber tube. By shifting the absorber tube its tubes get outside of the focal point of the lenses and the main part of the incident solar energy enters the space behind the absorber, directly heating this space.

These and similar devices are above all complex, but at the same time they are single-purpose. Document CZ 302600 B6 discloses a substantial simplification of the optical system. The lenses are mounted in mutually transverse rows in a planar bending-deformable carrying means or in vertical or horizontal lamellas. If the carrying means is transparent, the lenses are, for example, glued to its entire surface; if it is not transparent, the lenses are glued by their edges in corresponding cut-out holes. The optical means is simple, therefore also inexpensive and it can be easily moved or transferred, folded, rolled etc. The disadvantage is the fact that the exact adjustment of the position of the optical axes of the lenses according to the direction of the incident sun rays is difficult, which reduces the efficiency of the device.

The aim of the invention is to increase the efficiency of the device for converting the energy of concentrated solar radiation into electrical energy and/or thermal energy.

### Principle of the invention

The goal of the invention has been achieved by a device for the utilization of solar energy, whose principle consists in that absorbing means are mounted rotatably in a movable guide bar of a lamella, which is arranged below a support bar and is parallel with it, whereby one of its ends is coupled to a drive mechanism.

At the same time, a guide bar for deflecting the absorber is driven in relation to the longitudinal frame in one direction or the other by at least one drive mechanism. As a result, the absorbing member can observe the position of the sun and adapt to it by adjusting its position according to it.

The drive mechanism comprises a pair of oscillating links constituting curved tracks on which is reversibly displaceably mounted a slider, on which is mounted the end of the movable guide bar, whereby the slider is connected to a driving means which is coupled to the motor for displacing the slider along the pair of guides.

The slider is composed of four lifting lugs and connected by a connecting pin on which is mounted the end of the movable guide bar.

In a particular embodiment, the driving means is formed by an endless belt or a rope or chain encircling at least two guide pulleys and a drive pulley coupled to a bidirectional motor.

The absorbing means contains a photovoltaic cell, which is preferably located outside of the focal point of the lens, particularly preferably in front of the focal point of the optical lens. Thus, the photovoltaic cell is protected from undesired overheating which would occur at the focal point of the lens, whereby in the position in front of the focal point of the lens, a large amount of light falls on it regardless of another alternative arrangement of the absorbing means.

The absorbing means can also contain a heat exchanger tube to heat a liquid or gaseous medium, whereby it can at the same time carry also a photovoltaic cell. In that case, it is possible to utilize simultaneously or alternately the conversion of the solar energy into electrical energy or into thermal energy.

The heat exchanger tube is preferably located at the focal point of the optical lens, where maximum solar energy can be utilized without a danger of overheating the tube or the heat transfer medium.

The absorbing means can also contain the end of fiber optic waveguide for the entry of solar radiation. This extends the possibilities of the utilization of solar energy even after it has been converted into light energy.

Individual rigid lamellas are located in longitudinal frames, which are arranged in the main frame, in relation to which they are oscillatingly adjustable about the axes which are parallel to the longitudinal axes of the rigid lamellas. Thus the absorbing means can adapt to the sun in two directions.

Preferably, the longitudinal frames are arranged in a common planar surface, which allows to adjust the position of the absorbing members according to the sun.

If the space where the device for utilization of solar energy is located does not enable to arrange the longitudinal frames on a common planar surface, it is necessary to adjust their position, for example, to the terrain. The control of the position of the absorbing members in individual longitudinal frames is then adapted to this position of the longitudinal frames.

### Description of drawings

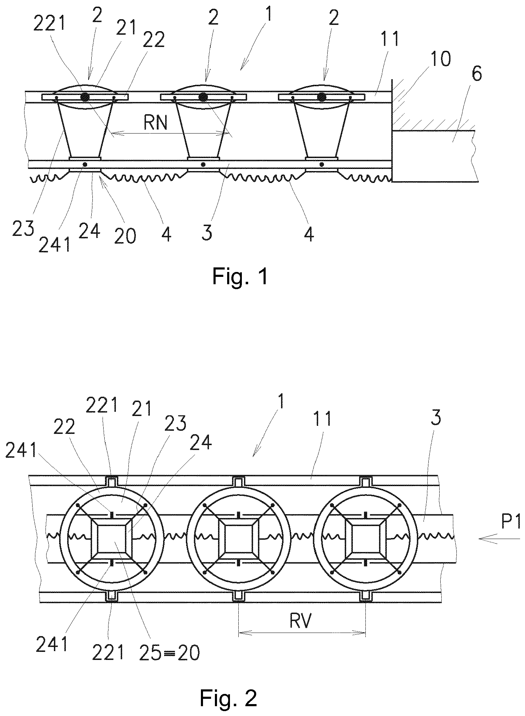

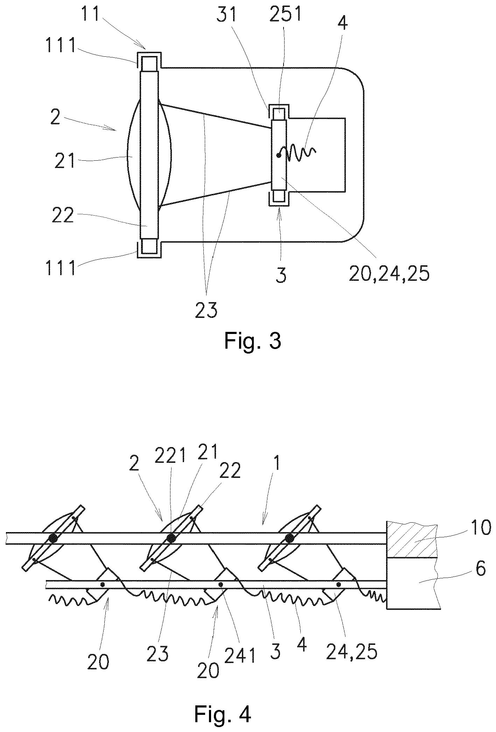

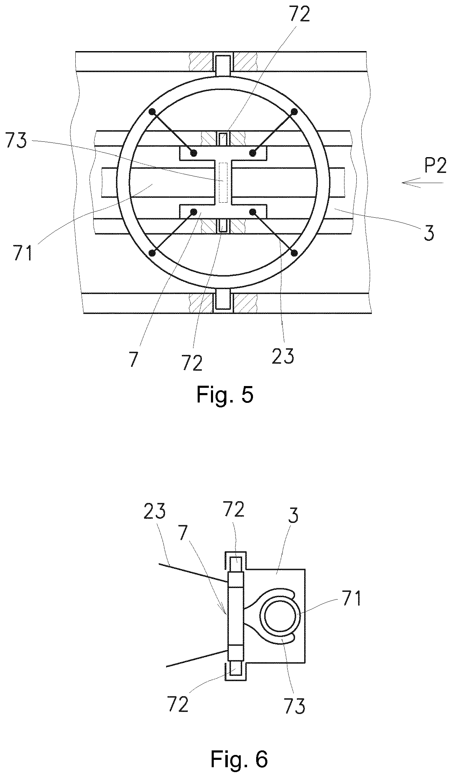

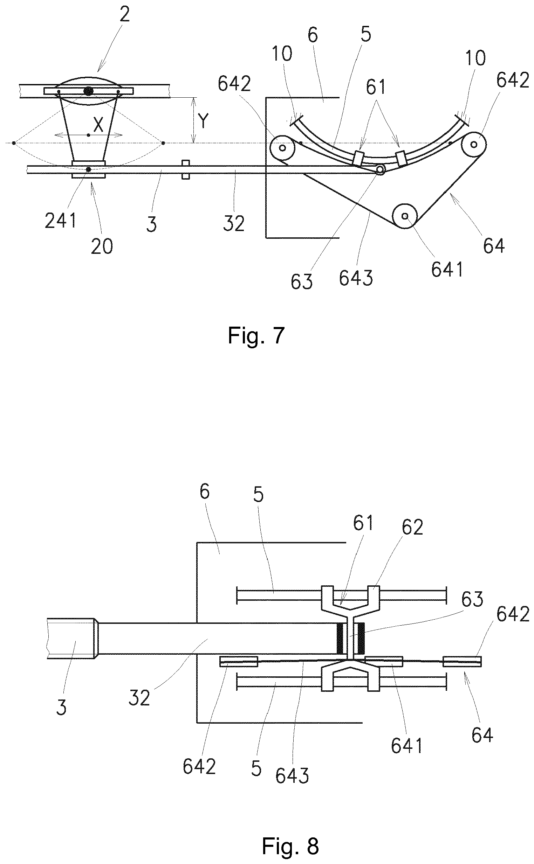

An example of embodiment of an improved device for the utilization of solar energy is schematically represented in the drawing, where Fig. 1 is a lateral view of a row of photovoltaic elements with optical means in a basic position; Fig. 2 shows a plan view to supplement Fig.1; Fig. 3 is a view of a lamella in the direction P1 of its longitudinal axis; Fig. 4 is a lateral view of a row of photovoltaic elements with optical means in an inclined position, Fig. 5 is a plan view of the element for the utilization of solar energy to heat a liquid medium; Fig. 6 is a lateral view in the direction P2 of a detail of the mounting of a heat exchanger tube from Fig. 5; in Fig. 7 there is a lateral view of the arrangement of the drive of a guide bar and in Fig.8 there is a plan view for Fig. 7.

### Specific description

A device for the utilization of solar energy is in an example of embodiment according to the invention designed in the form of elongated lamellas which can be used separately, or they can be arranged modularly in continuous large assemblies which have a shape of planar surfaces or, according to the possibilities of the space where they are to be installed, a shape of curved surfaces.

Fig. 1, 2 show the length section of the elongated lamella **1** in the basic configuration. For better understanding, only its substantial components are shown, the other segments are apparent from the view in the direction along the length of the lamella **1** in Fig. 3.

A firm part of the lamella is a support bar **11**, which is fixedly mounted in an unillustrated longitudinal frame **10** of the device. The support bar **11** is at both longitudinal ends provided with an edge **111**, in which are hung in a mutual spacing **RN** individual absorbing members **2**. An absorbing member **2** contains an optical lens **21**, which is in the example of embodiment fixed, for example, with glue into the annulus **22**. The annulus **22** is mounted oscillatingly by two rotating pins **221** in the support bar **11**.

To the annulus **22** is mounted by four rigid draw bars **23** a bed **24**, in which is fixedly mounted an absorbing element of concentrated solar radiation. In the case of a photovoltaic solar means this element is a photovoltaic cell **25**. In the lower portion of the lamella **1** is arranged in its longitudinal direction a movable guide bar **3**, whose longitudinal edges form hems **31**, in which in mutual distances **RV** identical with distances **RN** are oscillatingly mounted beds **24** of photovoltaic cells **25** with the aid of of lateral rotating pins **241**.

The photovoltaic cells **25** of one lamella are mutually electrically interconnected by conductors **4**.

The guide bar **3** is with both ends connected to oscillating links **5**. Only the oscillating link **5** at the end of the bar **3** on the right-hand side is illustrated, which is at the same time a rigid component of the drive mechanism **6** (Fig. 7, 8).

In the illustrated example of embodiment, the support bar **11** of the lamella **1** is made with a U-type profile, analogically to the guide bar **3**.

In an unillustrated embodiment, the lamella may be designed as a substantially planar elongated plate allowing the swinging mounting of the lenses **21.** In this case, the lenses **21** are disposed in the elliptical openings in this planar plate, which do not block the lens in its inclined position with the sun rays falling in an oblique direction. If the lens **21** is made of plastic, it does not have to be inserted in the annulus **22.** The draw bars **23** carrying the bed **24** for mounting the photovoltaic cell **5** and the lateral rotating pins **221** are cast directly in the material of the plastic lens.

Fig. 5 and 6 show a modification of the device - a solar collector heat exchanger, which is used, for example, for heating water or air or another liquid.

The bed **24** for mounting the photovoltaic cell **25** from Fig. 1 to 4 is replaced by a hinge **7** of the heat exchanger tube **71,** which is, for example, a metal tube or hose made of a suitable heat conducting material. The hinge **7** carried by the draw bars **23** has a shape of the letter "H" in the plan view in Fig. 5, whereby it is oscillatingly mounted in the guide bar **3** by lateral rotating pins **72** analogically to the bed **24** for mounting the photovoltaic cell **25** by the lateral rotating pins **241.** In the crossbar of the hinge **7** is mounted a flexible partially opened sleeve **73** for simple fixation of the longitudinal straight heat exchanger tube **71.**

The principal difference between the arrangement of the photovoltaic solar collector and a heat exchanger solar collector is the distance of the lens and the absorbing means itself, i.e. the photovoltaic cell **25** or the heat exchanger tube **71.** While the heat exchanger tube **71** is preferably located at the focal point of the optical lens **21,** where the device has the greatest efficiency, the photovoltaic cell **25** is situated outside of the focal point of the optical lens **21**, in an exemplary embodiment in front of the focal point of the optical lens **21**. This is necessary due to the material of the photovoltaic cell **25** itself, which is not able to withstand overheating by the high temperature of the radiation concentrated at the focal point. Moreover, in the position in front of the focal point of the optical lens **21** greater absorption of sun rays is utilized. In addition, the device enables easy replacement of one photovoltaic absorbing means **20** with a heat exchanger tube **71**, whereby it is possible to use in one absorbing means **20** simultaneously a photovoltaic cell **25** as well as a heat exchanger tube **71.**

The above-mentioned device according to the invention can be further used at least partially for the conversion of solar energy into light energy. In an unillustrated embodiment, the end of a fiber optic waveguide is in this case located at the focal point of the lens or in the vicinity of the focal point of the lens **21** of at least some absorbing members **2.** The fiber optic waveguide can be, for example, provided with an inner reflective layer blocking lateral irradiation of light and it can be used for lighting, for example, dark spaces, in which the light from the fiber optical waveguide is irradiated to facilitate the orientation of moving persons. The fiber optical waveguide with lateral light radiation, at least in a part of its length not provided with an inner reflective layer, can be also used for orientation in corridors and hallways or, for example, for glowing advertising signs and the like.

The movement of the moving guide bar **3** is carried out by at least one drive mechanism **6** according to Fig. 7. Both rigid ends **32** of the guide bar **3** are in a longitudinal direction substantially oscillatingly mounted relative to the longitudinal frame **10.** The end of the guide bar **3** is connected to the drive mechanism **6** by means of a slider **61**, which has a shape of the letter "H" in the plan view (Fig. 8). The slider **61** is by means of its four lifting lugs **62** slidingly mounted on a pair of guide oscillating links **5,** whereby the connecting pin **63** of the slider **61** is connected to the driving means **64** of the drive mechanism **6.** In an example of embodiment, the drive means **64** contains a belt gear with a drive pulley **641** mounted on a shaft of an unillustrated bidirectional rotary motor, with two guide pulleys **642** and an endless belt **643,** which is oscillatingly connected to the connecting pin **63** of the slider **61.** In an unillustrated embodiment, the driving means contains cable gear or chain gear instead of belt gear, optionally it can be formed by worm gear.

An unillustrated other end of the movable guide bar **3** (not shown) is mounted without the driving means **64** in an analogous manner to the end driven by means of the oscillating links **5** and the slider **61.** In an alternative unillustrated embodiment, the non-driven end of the movable guide bar **3** is suspended in relation to the longitudinal frame **10** by means of a pendulum in such a manner that it moves along a curve corresponding to the curvature of the oscillating links **5** similarly to the piston rod of a double-crank four-joint mechanism (parallelogram). It is apparent that in the case of a great length of the movable guide bar **3** synchronous drive mechanisms **6** may be at both its ends.

Individual elongated lamellas **1** are in the basic arrangement located next to each other, thus constituting substantially a planar surface. This planar surface may be rigid in an unillustrated common frame, whereby, the absorbing members **2** are arranged movable towards it in the above-described manner by means of rotating pins **221**, the absorbing members **2** swinging about axes perpendicular to the longitudinal axis of the support bar **11.** Individual lamellas **1** may be arranged as blinds, which in relation to the common frame oscillate about longitudinal axes of the lamellas **1** in the same mutual direction according to a method known from the background art, such as from document CZ 302600 B6.

The operation of the drive mechanism **6** is initiated by an unillustrated per se known sun-tracking device, whose information give signals for turning the drive motor of the driving means **64.** The driving means **64** shifts the slider **61** by means of an endless belt **643** in one or the other direction on the oscillating links **5**, whereby the guide bar **3** shifts in a direction parallel to the rigid support bar **11** by the distance **X**, whereby it changes its distance **Y** from the support bar **11.** Thus, around the pins a respective row of absorbing means of one lamella **1** is inclined so that the direction of their optical axes will get to the current direction of the incident rays. If it is a heat exchanger solar collector, also the heat exchanger tube **71** moves with the guide bar **3**, the ends of heat exchanger tube **71** being in the case of using the tube connected to the entire exchanger circuit by a flexible hose.

In an unillustrated embodiment, the bed **24** of the photovoltaic cell **25** and the hinge **7** of the heat exchanger tube **71** have a common universal shape, which allows to connect to it either the photovoltaic cell **25**, or the heat exchanger tube **71.** This versatility enables the user to relatively easily convert a photovoltaic system into a heat exchange system, e.g., depending on the season or in inaccessible areas, for instance even in space. An advantageous mutual position of the lens **21** and the photovoltaic cell **25** or the heat exchanger tube **71** can be implemented by an inserted sleeve **73** for securing the heat exchanger tube **71** or by setting the length of the draw bars **23**, which can be mounted in the annulus **22** of the lens **21**, or in the plastic lens, or in the bed **24** of the photovoltaic cell **25** by using high frictional forces, which cannot be overcome without intentionally applying external force.

The advantage of the device according to the invention is concentration of solar energy into the absorbing means **20**, which may be either a photovoltaic cell **25** or a heat exchanger tube **71**, or simultaneously both these types of absorbing means. The device enables continuous adjustment of the position of the absorbing means **20** according to the current position of the sun in the sky. In addition, the device contains relatively simple and inexpensive components, which makes it easy to replace them separately after being damaged, in contrast to, for example, large-scale panels. Also, the costs of the recycling of the device and its parts are considerably lower.

### List of references

- 1: lamella
- 10: frame of the device (longitudinal)
- 11: support bar (of the lamella)
- 2: absorbing member
- 20: absorbing means
- 21: lens (of the absorbing element)
- 22: annulus (of the lens)
- 221: pivot (of the annulus)
- 23: draw bar (joint of the annulus and the bed of the photovoltaic cell or the tube hinge)
- 24: bed of the photovoltaic cell
- 241: lateral pins (beds of the photovoltaic cell)
- 25: photovoltaic cell
- 3: guide bar (movable)
- 31: edge of the guide bar
- 32: end of the guide bar
- 4: conductors (electric)
- 5: oscillating link (guide oscillating link for the guide bar)
- 6: drive mechanism (of the guide bar)
- 61: slider
- 62: lifting lug (of the slider)
- 63: connecting pin (of the slider)
- 64: drive means
- 641: drive pulley (of the driving means)
- 643: endless belt
- 642: guide pulley (of the driving means)
- 644: endless belt (of the driving means)
- 7: hinge (of the heat exchanger tube)
- 71: heat exchanger tube
- 72: lateral rotating pin (of the hinge of the heat exchanger tube)
- 73: sleeve (of the heat exchanger tube)
- RN: mutual distance (of the absorbing members 2 in the support bar)
- RV: mutual distance (of the absorbing means 20 in the guide bar)
- X: distance (spacing between adjacent absorbing elements)
- Y: distance of the guide bar from the support bar of the guide bar from the support bar (when changing the position of the absorbing elements)

## Claims

1. A device for the utilization of solar energy which contains a row of absorbing members (2) and a rigid lamella (1) in which the absorbing members (2) are arranged, each of the absorbing members (2) contains an optical lens (21) and an absorbing means (20) coupled to the optical lens (21), wherein the rigid lamella comprises a support bar (11) and the absorbing members (2) are mounted oscillatingly in the support bar (11) of the rigid lamella (1), wherein the device further comprises a movable guide bar (3) and a drive mechanism (6), wherein the absorbing members (2) are rotatably mounted on the movable guide bar (3), which is parallel with the support bar (11) and is located below the support bar (11) and one of its ends (32) is coupled to the drive mechanism (6), wherein the drive mechanism (6) comprises a pair of oscillating links (5) constituting curved tracks, a slider (61), driving means (64) and a motor, wherein the slider (61) is reversibly displaceably mounted on the oscillating links (5), and the end of the movable guide bar (3) is mounted on the slider (61), wherein the slider (61) is connected to the driving means (64), which is coupled to the motor for displacing the slider (61) along the pair of oscillating links (5), wherein the slider (61) has a shape of the letter H in the plan view and is composed of four lifting lugs (62) slidingly mounted on the pair of oscillating links (5) and connected by a connecting pin (63), on which is mounted the end (32) of the movable guide bar (3).

2. The device according to claim 1, **characterized in that** the driving means (64) comprises a belt gear with a drive pulley (641) mounted on a shaft of a bidirectional rotary motor, with two guide pulleys (642) and an endless belt (643).

3. The device according to any of the preceding claims, **characterized in that** the absorbing means (20) contains a photovoltaic cell (25).

4. The device according to claim 3, **characterized in that** the photovoltaic cell (25) is located in front of the focal point of the optical lens (21).

5. The device according to any of the preceding claims, **characterized in that** the absorbing means (20) contains a heat exchanger tube (71) to heat a liquid or gaseous medium.

6. The device according to claim 5, **characterized in that** the heat exchanger tube (71) is located in the focal point of the optical lens (21).

7. The device according to one of the claims 1 to 2, **characterized in that** the absorbing means (20) contains an end of an optical fiber waveguide for the entry of solar radiation.

8. The device according to claim 7, **characterized in that** the end of the optical fiber waveguide is located at the focal point of the optical lens (21).

9. The device according to claim 7, **characterized in that** the end of the optical fiber waveguide is located in front of the focal point of the optical lens (21).

## Patentansprüche

1. Einrichtung zur Ausnutzung der Sonnenenergie, die eine Reihe von Absorptionsgliedern (2) und eine feste Lamelle (1) aufweist, in der die Absorptionsglieder (2) angeordnet sind, jedes von den Absorptionsgliedern weist eine optische Linse (21) und ein Absorptionsmittel (20) auf, das mit der optischen Linse (21) verkoppelt ist, wobei die feste Lamelle eine tragende Leiste (11) aufweist und die Absorptionsglieder (2) in der tragenden Leiste (11) der festen Lamelle (1) schwenkbar gelagert sind, wobei die Einrichtung weiter eine bewegliche Führungsleiste (3) und einen Antriebsmechanismus (6) aufweist, wobei die Absorptionsglieder (2) auf der beweglichen Führungsleiste (3) drehbar gelagert sind, die mit der tragenden Leiste (11) parallel laufend ist und die unter der tragenden Leiste (11) platziert ist und eines deren Enden (32) mit dem Antriebsmechanismus (6) verkoppelt ist, wobei der Antriebsmechanismus (6) ein Paar der Schwingen (5), die gekrümmte Bahnen bilden, Läufer (61), Antriebsmittel (64) und Motor aufweist, wobei der Läufer (61) auf den Schwingen (5) umkehrbar verstellbar gelagert ist, und auf dem Läufer (61) das Ende der beweglichen Führungsleiste (3) gelagert ist, wobei der Läufer (61) an das Antriebsmittel (64) angeschlossen ist, das mit dem Motor zur Verstellung des Läufers (61) auf dem Paar der Schwingen (5) verkoppelt ist, wobei der Läufer (61) in dem Grundriss die Form des Buchstabens H aufweist und durch vier Aufhängeösen (62) gebildet wird, die auf dem Paar der Schwingen (5) verschiebbar gelagert sind und durch Verbindungszapfen (63) verbunden sind, auf dem das Ende (32) der beweglichen Führungsleiste (3) gelagert ist.

2. Einrichtung nach dem Anspruch 1, **dadurch gekennzeichnet, dass** das Antriebsmittel (64) eine Antriebsrolle (641), die auf der Welle des Zweirichtungsumlaufmotors gelagert ist, mit zwei Führungsrollen (642) und einem endlosen Riemen (643) aufweist.

3. Einrichtung nach einem der vorangehenden Ansprüche, **dadurch gekennzeichnet, dass** das Absorptionsmittel (20) eine Photovoltaikzelle (25) aufweist.

4. Einrichtung nach dem Anspruch 3, **dadurch gekennzeichnet, dass** die Photovoltaikzelle (25) vor dem Fokus der optischen Linse (21) platziert ist.

5. Einrichtung nach einem der vorangehenden Ansprüche, **dadurch gekennzeichnet, dass** das Absorptionsmittel (20) ein Wärmeübertragungsrohr (71) zur Erwärmung des flüssigen oder gasförmigen Mediums aufweist.

6. Einrichtung nach dem Anspruch 5, **dadurch gekennzeichnet, dass** das Wärmeübertragungsrohr (71) in dem Fokus der optischen Linse (21) platziert ist.

7. Einrichtung nach einem der Ansprüche 1 bis 2, **dadurch gekennzeichnet, dass** das Absorptionsmittel (20) die Beendigung des Lichtwellenleiters für den Eintritt der Sonnenstrahlung aufweist.

8. Einrichtung nach dem Anspruch 7, **dadurch gekennzeichnet, dass** die Beendigung des Lichtwellenleiters in dem Fokus der optischen Linse (21) platziert ist.

9. Einrichtung nach dem Anspruch 7, **dadurch gekennzeichnet, dass** die Beendigung des Lichtwellenleiters vor dem Fokus der optischen Linse (21) platziert ist.

## Revendications

1. Dispositif pour utilisation de l'énergie solaire qui comprend une rangée d'éléments absorbants (2) et une lamelle fixe (1) dans laquelle sont disposés des éléments absorbants (2), chacun des éléments absorbants comprend une lentille optique (21) et un moyen absorbant (20) qui est lié avec la lentille optique (21), tandis que la lamelle fixe comprend une barre portante (11) et les éléments absorbants (2) sont montés de manière pivotante dans la barre portante (11) de la lamelle fixe (1), tandis que le dispositif comprend en outre une barre de guidage mobile (3) et un mécanisme d'entraînement (6), tandis que les éléments absobants (2) sont montés de manière pivotante sur la barre mobile de guidage (3) qui est parallèle à la barre portante (11) et qui est située sous la barre portante (11) et dont l'une des extrémités est couplée au mécanisme d'entraînement (6), tandis que le mécanisme d'entraînement (6) comprend une paire des coulisseaux (5) qui forment des chemins courbes (5), un curseur (61), un moyen d'entraînement (64) et un moteur, tandis que le curseur (61) est monté de manière réversible et réglable sur les coulisseaux (5), et l'extrémité de la barre de guidage mobile (3) est montée sur le curseur (61), tandis que le curseur (61) est couplé à un moyen d'entraînement (64) couplé au moteur pour déplacer le curseur (61) le long d'une paire des coulisseax (5), tandis que le curseur (61) a dans sa projection horizontale la forme de la lettre H et il est formé par quatre mailles suspendues (62) montées de manière coulissante sur les paires des coulisseaux (5) et reliées par le tenon de jonction (63) sur lequel l'extrémité (32) de la barre de guidage mobile (3) est montée.

2. Dispositif selon la revendication 1, **caractérisé en ce que** le moyen d'entraînement (64) comprend une poulie d'entraînement (641) montée sur un arbre moteur rotatif à deux voies avec deux poulies de guidage (642) et avec une courroie sans fin (643).

3. Dispositif selon l'une quelconque des revendications précédentes, **caractérisé en ce que** le moyen absorbant (20) comprend une cellule photovoltaïque (25).

4. Dispositif selon la revendication 3, **caractérisé en ce que** la cellule photovoltaïque (25) est située devant le foyer de la lentille optique (21).

5. Dispositif selon l'une quelconque des revendications précédentes, **caractérisé en ce que** le moyen absorbant (20) comprend un tube d'échange de chaleur (71) pour chauffer le milieu liquide ou gazeux.

6. Dispositif selon la revendication 5, **caractérisé en ce que** le tube d'échange de chaleur (71) est situé dans le foyer de la lentille optique (21).

7. Dispositif selon l'une des revendications 1 à 2, **caractérisé en ce que** le moyen absorbant (20) comprend une extrémité du guidage de la lumière pour l'entrée du rayonnement solaire.

8. Dispositif selon la revendication 7, **caractérisé en ce que** l'extrémité du guide de la lumière est située dans le foyer de la lentille optique (21).

9. Dispositif selon la revendication 7, **caractérisé en ce que** l'extrémité du guide de la lumière est située devant le foyer de la lentille optique (21).
